# EUROPÄISCHE PATENTSCHRIFT

(11) **EP 2 020 531 B1**
(45) Veröffentlichungstag und Bekanntmachung des Hinweises auf die Patenterteilung: **13.10.2010**
(21) Anmeldenummer: 07014452.2
(22) Anmeldetag: 23.07.2007
(51) Int. Cl.: F16G 15/04, F01D 25/24, F16L 23/036

(54) **Bolzen für eine Flanschverbindung**
Bolt for a flange connection
Boulon pour un raccord à brides

(43) Veröffentlichungstag der Anmeldung: 04.02.2009
(73) Patentinhaber: SIEMENS AKTIENGESELLSCHAFT, 80333 München (DE)
(72) Erfinder: Cizek, Petr, 67904 Adamov (CZ)

(56) Entgegenhaltungen:
- WO-A-2004/041629
- FR-A- 2 571 657
- US-B1- 6 234 541

## Beschreibung

Die Erfindung betrifft einen Bolzen für eine Flanschverbindung, die Flanschverbindung mit dem Bolzen und ein Verfahren zum Montieren der Flanschverbindung.

Eine Flanschverbindung ist eine lösbare mechanische Rohrverbindung mit zwei Flanschen, die gegeneinander verspannt sind. Beispielsweise weist das Gehäuse einer Dampfturbine einen Festflansch und eine an dem Gehäuse angeschlossene Frischdampfrohrleitung einen Losflansch auf, der zusammen mit dem Festflansch die Flanschverbindung bildet. Sowohl der Festflansch als auch der Losflansch weisen jeweils einen Flanschring auf. Beide Flanschringe weisen einen Lochkranz mit einer Vielzahl von Löchern auf, wobei die Löcher des einen Flanschrings mit den Löchern des anderen Flanschrings paarweise miteinander korrespondieren und miteinander fluchtend angeordnet sind. Durch die Lochpaare sind Schraubenbolzen gesteckt, die mit Muttern so verspannt sind, dass die Flanschringe von den Schraubenbolzen zusammengedrückt sind. Herkömmlich sind die Schraubenbolzen aus Stahl gefertigt, wobei die Muttern hydraulisch oder thermisch angezogen sind.

Beim Betrieb der Dampfturbine erwärmt der in der Frischdampfrohrleitung strömende Frischdampf die Flanschverbindung, beispielsweise auf 300 °C, so dass die Schraubenbolzen einer thermischen Belastung von 300 °C ausgesetzt sind. Hervorgerufen durch diese thermische Belastung ist die Festigkeit der Schraubenbolzen reduziert. Dem entgegenwirkend ist bei der Flanschverbindung eine große Anzahl von Schraubenbolzen mit großem Durchmesser vorzusehen, damit die Flanschverbindung eine erforderliche Festigkeit hat.

Die Schraubenbolzen sind über den Umfang der Flansche gleichmäßig verteilt. Hervorgerufen durch die große Anzahl der Schraubenbolzen und deren großen Durchmessern sind die Schraubenbolzen an den Flanschen dicht gedrängt angeordnet. Dadurch entstehen unter anderem Platzprobleme beim Anziehen der Muttern mit entsprechenden Werkzeugen, so dass die Montage der Frischdampfrohrleitung an die Dampfturbine kompliziert und zeitintensiv ist.

FR-A-2 571 657 offenbart ein Verfahren zum Herstellen eines Förder- oder Hebeelements, insbesondere in Form eines Kettenglieds, einen Hebehaken oder Bügel sowie ein nach dem Verfahren hergestelltes Förder- oder Hebeelement. Gemäß dem Herstellungsverfahren wird ein mit polymerisierbarem Harz ummanteltes Faserbündel derart geformt, dass eine geschlossene Krümmung gebildet wird. Das polymerisierbare Harz ist dabei geeignet, eine kontrollierte Vorpolymerisation bis zu einer bestimmten Festigkeit zu durchlaufen, wobei eine verformbare Eigenschaft des Harzes beibehalten wird. Die Krümmung wird zumindest zu einem Teil im verformbaren Zustand gebildet. Nach der Formgebung polymerisiert das Harz gänzlich aus.

Aufgabe der Erfindung ist es, einen Bolzen für eine Flanschverbindung, eine Flanschverbindung mit einem Bolzen und ein Verfahren zum Montieren der Flanschverbindung zu schaffen, wobei die Flanschverbindung einfach zu montieren ist und dennoch eine hohe Festigkeit hat.

Der erfindungsgemäße Bolzen für eine Flanschverbindung ist U-förmig ausgebildet und aus einem Faserverbundwerkstoff aufweisend eine Vielzahl von Fasern hergestellt, wobei der Bolzen eine Abstützeinrichtung zum Abstützen an einer ersten Flanschscheibe und eine Verriegelungseinrichtung zum Abstützen, Dehnen und Verriegeln an einer zweiten Flanschscheibe umfasst.

Die erfindungsgemäße Flanschverbindung weist den Bolzen, inklusive eine Abstützeinrichtung und eine Verriegelungseinrichtung auf, wobei die Flanschverbindung eine erste Flanschscheibe, die ein erstes Flanschloch und ein zweites Flanschloch aufweist, und eine zweite Flanschscheibe aufweist, die ein erstes Flanschloch und ein zweites Flanschloch aufweist, wobei das erste Flanschloch der ersten Flanschscheibe mit dem ersten Flanschloch der zweiten Flanschscheibe fluchtet und das zweite Flanschloch der ersten Flanschscheibe mit dem zweiten Flanschloch der zweiten Flanschscheibe fluchtet, wobei der Bolzen in das erste Flanschloch der ersten Flanschscheibe und das erste Flanschloch der zweiten Flanschscheibe sowie in das zweite Flanschloch der ersten Flanschscheibe und das zweite Flanschloch der zweiten Flanschscheibe gesteckt ist, so dass der Bolzen mittels der Abstützeinrichtung an der ersten Flanschscheibe abgestützt und mittels der Verriegelungseinrichtung an der zweiten Flanschscheibe abgestützt sowie gedehnt und verriegelt ist.

Das erfindungsgemäße Verfahren zum Montieren der Flanschverbindung weist die Schritte auf: Bereitstellen eines ersten Flanschs mit einer ersten Flanschscheibe, die ein erstes Flanschloch und ein zweites Flanschloch aufweist, und einer zweiten Flanschscheibe, die ein erstes Flanschloch und ein zweites Flanschloch aufweist, wobei das erste Flanschloch der ersten Flanschscheibe mit dem ersten Flanschloch der zweiten Flanschscheibe fluchtet und das zweite Flanschloch der ersten Flanschscheibe mit dem zweiten Flanschloch der zweiten Flanschscheibe fluchtet; Einstecken des erfindungsgemäßen Bolzens in das erste Flanschloch der zweiten Flanschscheibe und das erste Flanschloch der ersten Flanschscheibe sowie in das zweite Flanschloch der zweiten Flanschscheibe und das zweite Flanschloch der ersten Flanschscheibe; Abstützen des Bolzens mittels einer Abstützeinrichtung an der ersten Flanschscheibe; elastisches Dehnen des Bolzens; Abstützen an der zweiten Flanschscheibe und Verriegeln des Bolzens mittels der Verriegelungseinrichtung.

Der Faserverbundwerkstoff hat bei einer Temperatur bis zu 300 °C eine höhere Festigkeit als herkömmlicher Stahl. Somit kann der erfindungsgemäße Bolzen verglichen mit einem herkömmlichen Stahlbolzen im Querschnitt schlanker ausgeführt sein bei gleicher Festigkeit. Dadurch können ebenfalls die für den Bolzen vorgesehnen Flanschlöcher im Durchmesser vorteilhaft entsprechend kleiner ausgeführt sein.

Der Faserverbundwerkstoff des erfindungsgemäßen Bolzens ist so gut wie beliebig formbar. Somit kann der Bolzen mit einem runden oder einem rechteckigen Querschnitt versehen sein, wobei die Flanschlöcher dementsprechend angepasst ausgeführt sind. Dadurch kann die Querschnittsform des Bolzens hinsichtlich einer günstigen Spannungsverteilung in der Flanschverbindung und/oder eines günstigen Platzbedarfs des Bolzen, der Abstützeinrichtung und der Verriegelungseinrichtung gestaltet sein.

Der erfindungsgemäße Bolzen ist U-förmig ausgeführt, so dass der Bolzen einen ersten und einen zweiten Schenkel aufweist. Der erste Schenkel ist in das eine Flanschloch der Flanschverbindung gesteckt, wohingegen der zweite Schenkel in ein anderes Flanschloch der Flanschverbindung gesteckt ist. Dadurch greift ein einziger Bolzen in zwei Flanschlöcher ein, wodurch von dem einzigen Bolzen zwei Bolzenverbindungen gebildet sind. Dadurch braucht nur die Hälfte der erfindungsgemäßen Bolzen beim Bereitstellen der Flanschverbindung bereitgestellt zu werden, verglichen mit einer Flanschverbindung mit zylindrischen Bolzen. Somit ist der Montageaufwand bei der Flanschverbindung gering.

Zum Befestigen des erfindungsgemäßen Bolzens sind sowohl die Abstützeinrichtung als auch die Verriegelungseinrichtung vorgesehen. Beide Einrichtungen sind platzsparend an den Flanschscheiben angebracht, so dass deren Montage auch bei einem kleinen Platzangebot ermöglicht ist. Dadurch ist die Montage der Abstützeinrichtung und der Verriegelungseinrichtung einfacher verglichen mit einem Festziehen von Muttern.

Bevorzugt weisen die Fasern Kevlarfasern und/oder Karbonfasern und/oder Graphitfasern und/oder Glasfasern und/oder andere Fasern auf.

Diese unterschiedlichen Fasertypen haben unterschiedliche thermische Ausdehnungskoeffizienten. Somit erfährt der Bolzen, der beispielsweise aus Karbonfasern hergestellt ist, eine andere Wärmeausdehnung als der Bolzen, der beispielsweise aus Glasfasern hergestellt ist. Ferner sind Fasern mit einem negativen thermischen Ausdehnungskoeffizienten bekannt, wodurch der Bolzen, der mit derartigen Fasern hergestellt ist, einen negativen thermischen Ausdehnungskoeffizienten hat. Bei diesem Bolzen kann somit eine niedrige Vorspannung bei einer niedrigen Temperatur und eine hohe Vorspannung bei einer hohen Temperatur erzeugt werden, ohne dass der Bolzen ausgetauscht zu werden braucht. Dies ist beispielsweise vorteilhaft bei einer Flanschverbindung, die einer hohe Temperatur ausgesetzt ist und dabei hohe Festigkeitsanforderungen zu erfüllen hat. Mit der erfindungsgemäßen Flanschverbindung ist der Nachteil einer Flanschverbindung mit Stahlbolzen überwunden, dass bei sich erhöhender Temperatur die Vorspannung der Stahlbolzen aufgrund deren positiven thermischen Ausdehnungskoeffizienten sich erniedrigt.

Bevorzugt weist der Faserverbundwerkstoff eine Matrix zum Zusammenhalten der Fasern auf. Ferner ist es bevorzugt, dass die Matrix Kunstharz ist. Dadurch hat der erfindungsgemäße Bolzen vorteilhaft eine feste und kompakte Gestalt.

Bevorzugt ist es, dass der Bolzen zwei Längsendbereiche mit je einem Befestigungsloch und zwischen den Längsendbereichen angesiedelt einen Krümmungsabschnitt aufweist. Dadurch ist der erfindungsgemäße Bolzen als ein gleichschenkliges U ausgebildet.

Bevorzugt verlaufen in den Längsendbereichen die Fasern um die Befestigungslöcher herum. Dadurch sind die Längsendbereiche des Bolzens stabil ausgebildet, wodurch ein Ausreißen der Befestigungslöcher bei starker Beanspruchung des erfindungsgemäßen Bolzens unterbunden ist.

Bevorzugt sind die beiden Befestigungslöcher des Bolzens an der ersten Flanschscheibe angeordnet und die Abstützeinrichtung ist ein Querbolzen, der in die Befestigungslöcher gesteckt und an der ersten Flanschscheibe abgestützt ist. Dadurch ist der Bolzen mit dem Querbolzen an einem Steg, der zwischen dem ersten und dem zweiten Flanschloch der ersten Flanschscheibe ausgebildet ist, abgestützt.

Ferner ist es bevorzugt, dass die Abstützeinrichtung eine Unterlegplatte aufweist, die zwischen dem Querbolzen und der ersten Flanschscheibe angeordnet ist, so dass der Querbolzen an der Unterlegplatte abgestützt ist. Die Unterlegplatte kann in ihrer Dicke beliebig gewählt werden, so dass der Abstand des Querbolzens von der ersten Flanschscheibe durch das Vorsehen der Unterlegplatte mit einer entsprechenden Stärke vorbestimmt vorgesehen werden kann.

Bevorzugt ist es, dass die Verriegelungseinrichtung ein Gegenhaltekeil ist; der an der zweiten Flanschscheibe abgestützt ist. Der Gegenhaltekeil ist als sich verjüngend ausgebildet. Dadurch kann entsprechend der Position des Gegenhaltekeils in Bezug auf den Krümmungsabschnitt die Höhe des Gegenhaltekeils variiert werden. Ferner kann der Gegenhaltekeil selbsthemmend ausgebildet sein, so dass der Bolzen von dem Gegenhaltekeil an der zweiten Flanschscheibe verriegelt ist.

Bevorzugt weist der Gegenhaltekeil eine Abplattung auf, die an der zweiten Flanschscheibe anliegt. Die Abplattung des Gegenhaltekeils ist eine Fläche zum Anliegen des Bolzens an die zweite Flanschscheibe. Dadurch wird unter Berücksichtigung einer maximal zulässigen Zugkraft des Bolzens eine entsprechend definierte Flächenpressung von dem Gegenhaltekeil auf die zweite Flanschscheibe ausgeübt. Somit kann die Größe der Fläche der Abplattung entsprechend vorgesehen sein, so dass zulässige Festigkeitswerte der zweiten Flanschscheibe nicht überschritten werden.

Ferner ist es bevorzugt, dass der Gegenhaltekeil einen Rücken aufweist, an dem der Krümmungsabschnitt anliegt. Die Krümmung des Rückens ist an die Krümmung des Krümmungsabschnitts angepasst, so dass der Krümmungsabschnitt lediglich eine Zugbeanspruchung und keine Biegebeanspruchung erfährt. Dadurch kann der Bolzen einer hohen maximal zulässigen Zugkraft widerstehen.

Bevorzugt ist es, dass das erste Flanschloch der ersten Flanschscheibe und das erste Flanschloch der zweiten Flanschscheibe unmittelbar benachbart zu dem zweiten Flanschloch der ersten Flanschscheibe und dem zweiten Flanschloch der zweiten Flanschscheibe angeordnet sind. Dadurch liegen die miteinander fluchtend angeordneten Löcher unmittelbar nebeneinander angeordnet. Dadurch weisen die Flanschscheiben zwischen den ersten und den zweiten Flanschlöchern eine stabile Stegstruktur auf, an der der Bolzen mit seiner Abstützeinrichtung stabil abgestützt ist.

Bevorzugt ist es, dass die Flanschlöcher und der Bolzen korrespondierend runde und/oder rechteckige Querschnitte aufweisen.

Bei dem Verfahren zur Montage der Flanschverbindung ist es bevorzugt, dass die beiden Befestigungslöcher des Bolzens an der ersten Flanschscheibe anzuordnen sind und die Abstützeinrichtung ein Querbolzen ist, der in die Befestigungslöcher gesteckt wird, so dass der Querbolzen an der ersten Flanschscheibe abgestützt wird.

Ferner ist es beim Verfahren zur Montage der Flanschverbindung bevorzugt, dass die beiden Befestigungslöcher des Bolzens an der ersten Flanschscheibe anzuordnen sind und die Abstützeinrichtung ein Querbolzen ist, der in die Befestigungslöcher gesteckt wird, so dass der Querbolzen an der ersten Flanschseite abgestützt wird.

Bei dem Verfahren zur Montage der Flanschverbindung ist es bevorzugt, dass das Verfahren den Schritt aufweist: Anordnen einer Unterlegplatte zwischen dem Querbolzen und der ersten Flanschscheibe, so dass der Querbolzen an der Unterlegplatte abgestützt wird.

Bei dem Verfahren zur Montage der Flanschverbindung ist es bevorzugt, dass beim Abstützen des Krümmungsabschnitts der Gegenhaltekeil zwischen dem Krümmungsabschnitt und der zweiten Flanschscheibe eingesteckt wird, so dass der Bolzen an der zweiten Flanschscheibe verriegelt wird.

Ferner ist es bei dem Verfahren zur Montage der Flanschverbindung bevorzugt, dass das elastische Dehnen des Bolzen hydraulisch bewerkstelligt wird.

Außerdem ist es bevorzugt, dass die Flanschverbindung eine Dampfturbinenflanschverbindung ist.

Der Faserverbundwerkstoff des Bolzens hat bis 300 °C eine hohe Festigkeit. Der Frischdampfstutzen einer Niederdruckdampfturbine hat herkömmlich eine thermische Belastung von ebenfalls 300 °C. Somit ist die Verwendung des erfindungsgemäßen Bolzens bei der Dampfturbinenflanschverbindung vorteilhaft.

Im folgenden wird die Erfindung anhand bevorzugter Ausführungsformen der erfindungsgemäßen Flanschverbindung unter Bezugnahme auf die schematischen Zeichnungen beschrieben. Es zeigt:
Fig.1 eine perspektivische Ansicht einer erfindungsgemäßen Flanschverbindung,
Fig. 2 eine Seitenansicht eines erfindungsgemäßen Bolzens,
Fig. 3 Flanschlöcher einer ersten erfindungsgemäßen Ausführungsform der Flanschverbindung und
Fig. 4 Flanschlöcher einer zweiten erfindungsgemäßen Ausführungsform der Flanschverbindung.

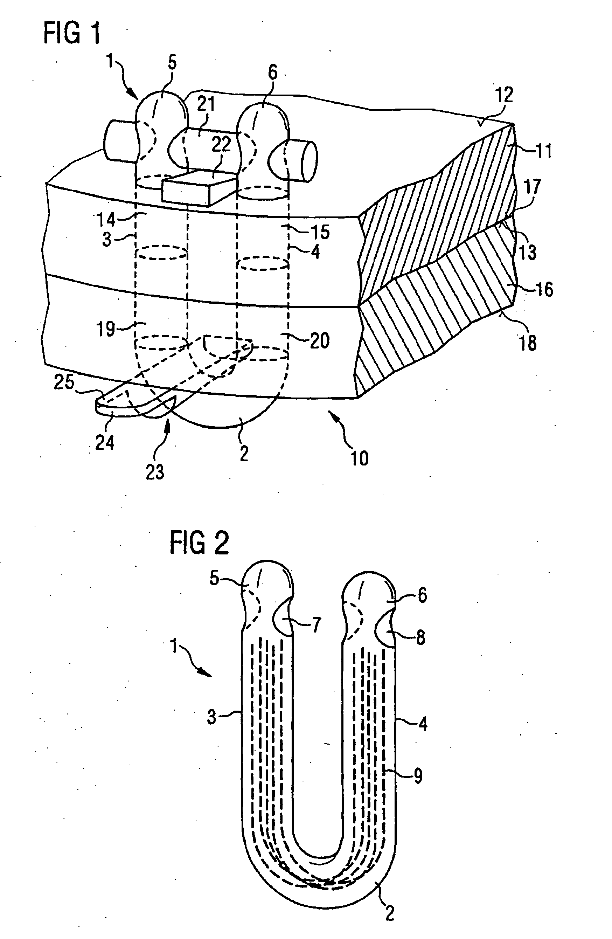

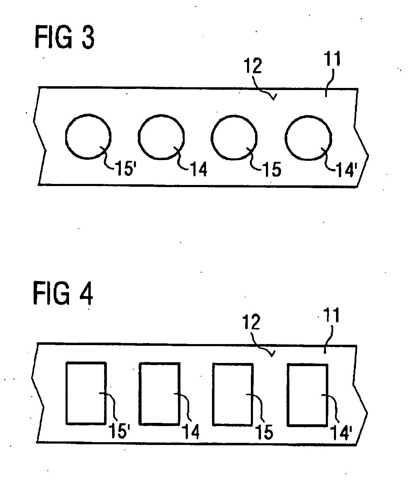

Wie es aus Fig. 1 bis 3 ersichtlich ist, weist eine Flanschverbindung 10 eine obere Flanschscheibe 11 mit einer Oberseite 12 und einer Unterseite 13 und eine untere Flanschscheibe 16 mit einer Oberseite 17 und einer Unterseite 18 auf. Die Flanschscheiben 11 und 16 sind aneinander liegend angeordnet, so dass die Unterseite 13 der oberen Flanschscheibe 11 an der Oberseite 17 der unteren Flanschscheibe 16 anliegt, wobei in Fig.1 die obere Flanschscheibe 11 oben und die untere Flanschscheibe 16 unten angeordnet ist.

Die obere Flanschscheibe 11 weist in Fig. 1 gesehen ein linkes Flanschloch 14 und ein rechtes Flanschloch 15 und die untere Flanschscheibe 16 weist ein in Fig. 1 gesehen ein linkes Flanschloch 19 und ein rechtes Flanschloch 20 auf. Die Flanschlöcher 14, 15, 19, 20 sind in den jeweiligen Flanschscheiben 11, 16 derart angeordnet und die Flanschscheiben 11 und 16 sind zueinander örtlich derart in Bezug gesetzt, dass das linke Flanschloch 14 der oberen Flanschscheibe 11 und das linke Flanschloch 19 der unteren Flanschscheibe 16 miteinander fluchtend einen Kanal bilden, der durch beide Flanschsscheiben 11, 16 sich erstreckt. In analoger Weise trifft das für die rechten Flanschlöcher 15, 20 zu.

Ein Bolzen 1 ist U-förmig ausgebildet und weist in seiner Mitte einen Krümmungsabschnitt 2 auf. Symmetrisch sind an den Krümmungsabschnitt 2 in Fig. 2 gesehen ein linker Geradabschnitt 3 und ein rechter Geradabschnitt 4 jeweils an den Krümmungsabschnitt 3 anschließend angeordnet. An den linken Geradabschnitt 3 anschließend ist ein linker Befestigungsabschnitt 5 vorgesehen und an den rechten Geradabschnitt 4 anschließend ist ein rechter Befestigungsabschnitt 6 vorgesehen. Die Befestigungsabschnitte 5, 6 bilden Längsendbereiche des Bolzens 1, in denen entsprechend ein linkes Befestigungsloch 7 und ein rechtes Befestigungsloch 8 vorgesehen sind.

Der Bolzen 1 ist aus Karbonfasern 9 gefertigt, die entlang der Längserstreckung des Bolzens 1 sich erstrecken. Die Karbonfasern 9 verlaufen in dem Bolzen 1 in den Befestigungsabschnitten 5, 6 derart, dass die Karbonfasern 9 jeweils um die Befestigungslöcher 7, 8 verlaufend angeordnet sind.

Der Bolzen 1 ist in die Flanschlöcher 14, 15, 19, 20 gesteckt, wobei der linke Geradabschnitt 3 in dem linken Flanschloch 14 der oberen Flanschscheibe 11 und dem linken Flanschloch 19 der unteren Flanschscheibe 16 sich erstreckt und der rechte Geradabschnitt 4 in dem rechten Flanschloch 15 der oberen Flanschscheibe 11 und dem rechten Flanschloch 20 der unteren Flanschscheibe 16 sich erstreckt. Ferner ist der Bolzen 1 in den Flanschlöchern 14, 15, 19, 20 derart angeordnet, dass der linke Befestigungsabschnitt 5 an der Oberseite 12 der oberen Flanschscheibe 11 aus dem linken Flanschloch 14 von der oberen Flanschscheibe 11 absteht und der rechte Befestigungsabschnitt 6 an der Oberseite 12 der oberen Flanschscheibe 11 aus dem rechten Flanschloch 19 von der oberen Flanschscheibe 11 absteht.

Sowohl das linke Befestigungsloch 7 als auch das rechte Befestigungsloch 8 sind im Abstand von der Oberfläche 12 der oberen Flanschscheibe 11 angeordnet. An der Unterseite 18 der unteren Flanschscheibe 16 erstreckt sich der Krümmungsabschnitt 2 von dem linken Flanschloch 19 der unteren Flanschscheibe 16 und dem rechten Flanschloch 20 der unteren Flanschscheibe 16.

Durch das linke Befestigungsloch 7 und das rechte Befestigungsloch 8 ist ein Querbolzen 21 eingesteckt, der den linken Befestigungsabschnitt 5 und den rechten Befestigungsabschnitt 6 überbrückt. Der Querbolzen 21 ist parallel zur Oberfläche 12 der oberen Flanschscheibe 11 angeordnet, wobei zwischen dem Querbolzen 21 und der Oberfläche 12 der oberen Flanschscheibe 11 ein Spalt ausgebildet. Den Spalt von der Oberfläche 12 der oberen Flanschscheibe 11 zu dem Querbolzen 21 überbrückend ist auf der Oberseite 12 der oberen Flanschscheibe 11 eine Unterlegplatte 22 vorgesehen, so dass der Bolzen 1 via den Querbolzen 21 und der Unterlegplatte 22 auf der Oberfläche 12 der oberen Flanschscheibe 11 abgestützt ist.

An der Unterseite 18 der unteren Flanschscheibe 16 ist zwischen dem Krümmungsabschnitt 2 und der Unterseite 18 der untern Flanschscheibe 16 ein halbmondförmiges Auge ausgebildet. In das Auge ist ein Gegenhaltekeil 23 eingesetzt, so dass von dem Gegenhaltekeil 23 der Krümmungsabschnitt 2 und die Unterseite 18 der unteren Flanschscheibe 16 überbrückt ist.

Der Gegenhaltekeil 23 ist als sich verjüngend ausgebildet und weist an seiner dem Krümmungsradius 2 zugewandten Seite einen Rücken 24 auf, der den selben Krümmungsradius wie der Krümmungsabschnitt 2 hat. Dadurch ist der Krümmungsabschnitt 2 an dem Gegenhaltekeil 23 stabil abgestützt.

Dem Rücken 24 abgewandt weist der Gegenhaltekeil 23 eine Abplattung 25 auf, die an der Unterseite 18 der unteren Flanschscheibe 16 anliegt.

Der Gegenhaltekeil 23 ist mit seinem sich verjüngenden Querschnitt in das Auge eingesetzt, so dass der Bolzen gegen die Abstützung hervorgerufen von dem Querbolzen 21 verriegelt ist.

### Bezugszeichenliste

- 1: Bolzen
- 2: Krümmungsabschnitt
- 3: linker Geradabschnitt
- 4: rechter Geradabschnitt
- 5: linker Befestigungsabschnitt
- 6: rechter Befestigungsabschnitt
- 7: linkes Befestigungsloch
- 8: rechtes Befestigungsloch
- 9: Karbonfasern
- 10: Flanschverbindung
- 11: obere Flachscheibe
- 12: Oberseite der der oberen Flachscheibe
- 13: Unterseite der der oberen Flachscheibe
- 14: linkes Flanschloch der oberen Flachscheibe
- 15: rechtes Flanschloch der oberen Flachscheibe
- 16: untere Flanschscheibe
- 17: Oberseite der der unteren Flachscheibe
- 18: Unterseite der der unteren Flachscheibe
- 19: linkes Flanschloch der unteren Flachscheibe
- 20: rechtes Flanschloch der unteren Flachscheibe
- 21: Querbolzen
- 21: Unterlegplatte
- 22: Gegenhaltekeil
- 23: Rücken des Gegenhaltekeils
- 24: Abplattung des Gegenhaltekeils

## Patentansprüche

1. Bolzen für eine Flanschverbindung (10), wobei der Bolzen (1) U-förmig ausgebildet ist und aus einem Faserverbundwerkstoff aufweisend eine Vielzahl von Fasern (9) hergestellt ist, **dadurch gekennzeichnet, dass** der Bolzen eine Abstützeinrichtung (21, 22) zum Abstützen an einer ersten Flanschscheibe (11) und eine Verriegelungseinrichtung (23) zum Abstützen, Dehnen und Verriegeln an einer zweiten Flanschscheibe (16) umfasst.

2. Bolzen gemäß Anspruch 1,
wobei Faserverbundwerkstoff Kevlarfasern und/oder Karbonfasern (9) und/oder Graphitfasern und/oder Glasfasern und/oder andere Fasern aufweist.

3. Bolzen gemäß Anspruch 2,
wobei der Faserverbundwenkstoff eine Matrix zum Zusammenhalten der Fasern (9) aufweist.

4. Bolzen gemäß Anspruch 3,
wobei die Matrix Kunstharz ist.

5. Bolzen gemäß einem der Ansprüche 1 bis 4,
wobei der Bolzen (1) zwei Längsendbereiche (3 bis 6) mit je einem Befestigungsloch (7, 8) und zwischen den Längsendbereichen (3 bis 6) angesiedelt einen Krümmungsabschnitt (2) aufweist.

6. Bolzen gemäß Anspruch 5,
wobei in den Längsendbereichen (3 bis 6) die Fasern (9) um die Befestigungslöcher (7, 8) herum verlaufen.

7. Bolzen gemäß einem der Ansprüche 1 bis 6,
wobei die Flanschverbindung eine Dampfturbinenflanschverbindung ist.

8. Flanschverbindung mit einem Bolzen gemäß einem der Ansprüche 1 bis 7, wobei die Flanschverbindung (10) eine erste Flanschscheibe (11), die ein erstes Flanschloch (14) und ein zweites Flanschloch (15) aufweist, und eine zweite Flanschscheibe (16) aufweist, die ein erstes Flanschloch (19) und ein zweites Flanschloch (20) aufweist, wobei das erste Flanschloch (14) der ersten Flanschscheibe (11) mit dem ersten Flanschloch (19) der zweiten Flanschscheibe (16) fluchtet und das zweite Flanschloch (15) der ersten Flanschscheibe (11) mit dem zweiten Flanschloch (20) der zweiten Flanschscheibe (16) fluchtet, wobei der Bolzen (1) in das erste Flanschloch (15) der ersten Flanschscheibe (11) und das erste Flanschloch (1) der zweiten Flanschscheibe (16) sowie in das zweite Flanschloch (15) der ersten Flanschscheibe (11) und das zweite Flanschloch (20) der zweiten Flanschscheibe (16) gesteckt ist, so dass der Bolzen (1) mittels der Abstützeinrichtung (21, 22) an der ersten Flanschscheibe (11) abgestützt und mittels der Verriegelungseinrichtung (23) an der zweiten Flanschscheibe (16) abgestützt sowie gedehnt und verriegelt ist.

9. Flanschverbindung gemäß Anspruch 8,
wobei die beiden Befestigungslöcher (7, 8) des Bolzens (1) an der ersten Flanschscheibe (11) angeordnet sind und die Abstützeinrichtung ein Querbolzen (21) ist, der in die Befestigungslöcher (7, 8) gesteckt und an der ersten Flanschscheibe (11) abgestützt ist.

10. Flanschverbindung gemäß Anspruch 9,
wobei die Abstützeinrichtung eine Unterlegplatte (22) aufWeist, die zwischen dem Querbolzen (21) und der ersten Flanschscheibe (11) angeordnet ist, so dass der Querbolzen (21) an der Unterlegplatte (22) abgestützt ist.

11. Flanschverbindung gemäß einem der Ansprüche 8 bis 10,
wobei die Verriegelungseinrichtung ein Gegenhaltekeil (23) ist, der an der zweiten Flanschscheibe (16) abgestützt ist.

12. Flanschverbindung gemäß Anspruch 11,
wobei der Gegenhaltekeil (23) eine Abplattung (25) aufweist, die an der zweiten Flanschscheibe (16) anliegt.

13. Flanschverbindung gemäß Anspruch 11 oder 12,
wobei der Gegenhaltekeil (23) einen Rücken (24) aufweist, an den der Krümmungsabschnitt (2) anliegt.

14. Flanschverbindung gemäß einem der Ansprüche 8 bis 13,
wobei das erste Flanschloch (14) der ersten Flanschscheibe (11) und das erste Flanschloch (19) der zweiten Flanschscheibe (16) unmittelbar benachbart zu dem zweiten Flanschloch (15) der ersten Flanschscheibe (11) und dem zweiten Flanschloch (20) der zweiten Flanschscheibe (16) angeordnet sind.

15. Flanschverbindung gemäß einem der Ansprüche 8 bis 14,
wobei die Flanschlöcher (14, 15, 19, 20) und der Bolzen (1) korrespondierende runde und/oder rechteckige Querschnitte aufweisen.

16. Flanschverbindung gemäß einem der Ansprüche 8 bis 15,
wobei die Flanschverbindung eine Dampfturbinenflanschverbindung ist.

17. Verfahren zum Montieren einer Flanschverbindung, aufweisend die Schritte:
- Bereitstellen eines ersten Flanschs mit einer ersten Flanschscheibe (11), die ein erstes Flanschloch (14) und ein zweites Flanschloch (15) aufweist, und einer zweiten Flanschscheibe (16), die ein erstes Flanschloch (19) und ein zweites Flanschloch (20) aufweist, wobei das erste Flanschloch (15) der ersten Flanschscheibe (11) mit dem ersten Flanschloch (19) der zweiten Flanschscheibe (16) fluchtet und das zweite Flanschloch (15) der ersten Flanschscheibe (11) mit dem zweiten Flanschloch (20) der zweiten Flanschscheibe (16) fluchtet,
- Einstecken eines Bolzens (1) gemäß einem der Ansprüche 1 bis 6 in das erste Flanschloch (19) der zweiten Flanschscheibe (16) und das erste Flanschloch (11) der ersten Flanschscheibe (11) sowie in das zweite Flanschloch (20) der zweiten Flanschscheibe (16) und das zweite Flanschloch (15) der esten Flanschscheibe (11),
- Abstützen des Bolzens (1) mittels seiner Abstützeinrichtung (21, 22) an der ersten Flanschscheibe (11),
- elastisches Dehnen des Bolzens (1),
- Abstützen an der zweiten Flanschscheibe (16) und Verriegeln des Bolzens (1) mittels der Verriegelungseinrichtung (23).

18. Verfahren gemäß Anspruch 17,
wobei die beiden Befestigungslöcher (7, 8) des Bolzens (1) an der ersten Flanschscheibe (11) anzuordnen sind und die Abstützeinrichtung ein Querbolzen (21) ist, der in die Befestigungslöcher (7, 8) gesteckt wird, so dass der Querbolzen (21) an der ersten Flanschscheibe (11) abgestützt wird.

19. Verfahren gemäß Anspruch 18 mit dem Schritt: Anordnen einer Unterlegplatte (22) zwischen dem Querbolzen (21) und der ersten Flanschscheibe (11), so dass der Querbolzen (21) an der Unterlegplatte (22) abgestützt ist.

20. Verfahren gemäß einem der Ansprüche 17 bis 19,
wobei beim Abstützen des Krümmungsabschnitts (2) ein Gegenhaltekeil (23) zwischen dem Krümmungsabschnitt (2) und der zweiten Flanschscheibe (16) eingesteckt wird, so dass der Bolzen (1) an der zweiten Flanschscheibe (16) verriegelt wird.

21. Verfahren gemäß einem der Ansprüche 17 bis 20,
wobei das elastische Dehnen des Bolzens (1) hydraulisch bewerkstelligt wird.

22. Verfahren gemäß einem der Ansprüche 17 bis 21,
wobei die Flanschverbindung eine Dampfturbinenflanschverbindung ist.

## Claims

1. Bolt for a flange connection (10), with the bolt (1) being embodied in a U shape and being manufactured from a fibre composite material having a plurality of fibres (9), **characterised in that** the bolt comprises a support device (21, 22) for support on a first flange washer (11) and a locking device (23) for support, expansion and locking on a second flange washer (16).

2. Bolt according to claim 1, 11,
with the fibre composite material having Kevlar fibres and/or carbon fibres (9) and/or graphite fibres and/or glass fibres and/or other fibres.

3. Bolt according to claim 2,
with the fibre composite material featuring a matrix for holding the fibres (9) together.

4. Bolt according to claim 3,
with the matrix being synthetic resin

5. Bolt according to one of claims 1 to 4.
with the bolt (1) having two long end areas (3 to 6) each with an attachment hole (7, 8) and having a curved section (2) between the long end areas (3 to 6).

6. Bolt according to claim 5,
with the fibres (9) running around the attachment holes (7, 8) in the long end areas (3 to 6).

7. Bolt according to one of claims 1 to 6,
with the flange connection being a steam turbine flange connection.

8. Flange connection with a bolt according to one of claims 1 to 7,
with the flange connection (10) having a first flange disk (11) featuring a first flange hole (14) and a second flange hole (15), and a second flange disk (16) featuring a first flange hole (19) and a second flange hole (20), with the first flange hole (14) of the first flange disk (11) aligning with the first flange hole (19) of the second flange disk (16) and the second flange hole (15) of the first flange disk (11) aligning with the second flange hole (20) of the second flange disk (16), with the bolt being inserted into the first flange hole (14) of the first flange disk (11) and the first flange hole (19) of the second flange disk (16) as well as into the second flange hole (15) of the first flange disk and the second flange hole (20) of the second flange disk (16) so that the bolt is supported by means of the support device (21, 22) against the first flange disk (11) and by means of the locking device (23) against the second flange disk (16) as well as being expanded and locked.

9. Flange connection according to claim 8,
with the two attachment holes (7, 8) of the bolt (1) being arranged on the first flange disk (11) and the support device being a transverse bolt (21) which is pushed into the attachment holes (7, 8) and supported on the first flange disk (11) .

10. Flange connection according to claim 9,
with the support device having a shim (22) which is disposed between the transverse bolt (21) and the first flange disk (11) so that the transverse bolt (21) is supported on the shim (22).

11. Flange connection according to one of claims 8 to 10,
with the locking device being an opposing holding wedge (23) which is supported on the second flange disk (16).

12. Flange connection according to claim 11,
with the opposing holding wedge (23) having a flattened-off area which is in contact with the second flange disk (16).

13. Flange connection according to claim 11 or 12,
with the opposing holding wedge (23) having a back (24) which is in contact with the curved section (2).

14. Flange connection according to one of claims 8 to 13,
with the first flange hole (14) of the first flange disk (11) and the first flange hole (19) of the second flange disk (16) being disposed immediately adjacent to the second flange hole (15) of the first flange disk (11) and second flange hole (20 of the second flange disk (16).

15. Flange connection according to one of claims 8 to 14.
with the flange holes (14, 15, 19, 20) and the bolts (1) having corresponding round and/or rectangular cross sections.

16. Flange connection according to one of claims 8 to 15
with the flange connection being a steam turbine connection.

17. Method for assembling a flange connection, comprising the following steps:
- Providing a first flange with a first flange disk (11), having a first flange hole (14) and a second flange hole (15), and a second flange disk (16), having a first flange hole (19) and a second flange hole (20), with the first flange hole (15) of the first flange disk (11) aligning with the first flange hole (19) of the second flange disk (16) and the second flange hole (15) of the first flange disk (11) aligning with the second flange hole (20) of the second flange disk (16),
- Insertion of a bolt (1) in accordance with one of claims 1 to 6 into the first flange hole (19) of the second flange disk (16) and into the first flange hole (11) of the first flange disk (11) as well as into the second flange hole (20) of the second flange disk (16) and into the second flange hole (15) of the first flange disk (11),
- Supporting the bolt (1) by means of its support device (21, 22) on the first flange disk (11),
- Elastic expansion of the bolt (1),
- Support on the second flange disk (16) and locking of the bolt CO by means of the locking device (23).

18. The method according to claim 17,
where the two attachment holes (7, 8) of the bolt (1) are to be disposed on the first flange disk (11) and the support device is a transverse bolt (21) which is pushed into the attachment holes (7, 8) so that the transverse bolt (21) is supported on the first flange disk (11).

19. The method according to claim 18 with the step: Disposing a shim (22) between the transverse bolt (21) and the first flange disk (11), so that the transverse bolt (21) is supported on the shim (22).

20. The method according to one of claims 17 to 19, with an opposing holding wedge (23) being pushed in during the supporting operation of the curved section (2) between the curved section (2) and the second flange disk (16), so that the bolt (1) is locked onto the second flange disk (16).

21. The method according to one of claims 17 to 20,
with the elastic expansion of the bolt (1) being effected hydraulically.

22. The method according to one of claims 17 to 21,
with the flange connection being a steam turbine flange connection.

## Revendications

1. Boulon pour un raccord à brides (10), le boulon (1) étant réalisé en forme de U et fabriqué à partir d'un matériau composite renforcé de fibres présentant une pluralité de fibres (9), **caractérisé en ce que** le boulon comprend un dispositif d'appui (21, 22) pour s'appuyer sur une première rondelle à brides (11) et un dispositif de verrouillage (23) pour s'appuyer, s'élonger et se verrouiller sur une seconde rondelle à brides (16).

2. Boulon selon la revendication 1,
le matériau composite renforcé de fibres présentant des fibres de Kevlar et/ou des fibres de carbone (9) et/ou des fibres de graphite et/ou des fibres de verre et/ou d'autres fibres.

3. Boulon selon la revendication 2,
le matériau composite renforcé de fibres présentant une matrice destinée à maintenir ensemble les fibres (9).

4. Boulon selon la revendication 3,
la matrice étant de la résine synthétique.

5. Boulon selon l'une quelconque des revendications 1 à 4,
le boulon (1) présentant deux parties terminales longitudinales (3 à 6) comprenant chacune un trou de fixation (7, 8) et une section coudée (2), logée entre les parties terminales longitudinales (3 à 6).

6. Boulon selon la revendication 5,
les fibres (9), dans les parties terminales longitudinales (3 à 6), s'étendant autour des trous de fixation (7, 8).

7. Boulon selon l'une quelconque des revendications 1 à 6,
le raccord à brides étant un raccord à brides de turbine à vapeur.

8. Raccord à brides comprenant un boulon selon l'une quelconque des revendications 1 à 7, le raccord à brides (10) présentant une première rondelle à brides (11), qui présente un premier trou de bride (14) et un second trou de bride (15), et une seconde rondelle à brides (16), qui présente un premier trou de bride (19) et un second trou de bride (20), le premier trou de bride (14) de la première rondelle à brides (11) étant aligné avec le premier trou de bride (19) de la seconde rondelle à brides (16) et le second trou de bride (15) de la première rondelle à brides (11) étant aligné avec le second trou de bride (20) de la seconde rondelle à brides (16), le boulon (1) étant enfoncé dans le premier trou de bride (15) de la première rondelle à brides (11) et dans le premier trou de bride (19) de la seconde rondelle à brides (16) ainsi que dans le second trou de bride (15) de la première rondelle à brides (11) et dans le second trou de bride (20) de la seconde rondelle à brides (16), de sorte que le boulon (1) est soutenu sur la première rondelle à brides (11) au moyen du dispositif d'appui (21, 22) et qu'il est soutenu sur la seconde rondelle à brides (16) au moyen du dispositif de verrouillage (23), ainsi qu'élongé et verrouillé.

9. Raccord à brides selon la revendication 8,
les deux trous de fixation (7, 8) du boulon (1) étant disposés sur la première rondelle à brides (11) et le dispositif d'appui étant un boulon transversal (21) qui est enfoncé dans les trous de fixation (7, 8) et est soutenu sur la première rondelle à brides (11).

10. Raccord à brides selon la revendication 9,
le dispositif d'appui présentant une plaque d'appui (22) qui est disposée entre le boulon transversal (21) et la première rondelle à brides (11), de sorte que le boulon transversal (21) est soutenu sur la plaque d'appui (22).

11. Raccord à brides selon l'une quelconque des revendications 8 à 10,
le dispositif de verrouillage étant une clavette de contre-maintien (23) qui est soutenue sur la seconde rondelle à brides (16).

12. Raccord à brides selon la revendication 11,
la clavette de contre-maintien (23) présentant un aplatissement (25) qui est adjacent à la seconde rondelle à brides (16).

13. Raccord à brides selon la revendication 11 ou 12,
la clavette de contre-maintien (23) présentant un dos (24) auquel est la section coudée (2) est adjacente.

14. Raccord à brides selon l'une quelconque des revendications 8 à 13,
le premier trou de bride (14) de la première rondelle à brides (11) et le premier trou de bride (19) de la seconde rondelle à brides (16) étant disposés de manière directement avoisinante au second trou de bride (15) de la première rondelle à brides (11) et au second trou de bride (20) de la seconde rondelle à brides (16).

15. Raccord à brides selon l'une quelconque des revendications 8 à 14,
les trous de brides (14, 15, 19, 20) et le boulon (1) présentant des sections rondes et/ou rectangulaires correspondant.

16. Raccord à brides selon l'une quelconque des revendications 8 à 15,
le raccord à brides étant un raccord à brides de turbine à vapeur.

17. Procédé de montage d'un raccord à brides présentant les étampes :
- fourniture d'une première bride comprenant une première rondelle à brides (11), qui présente un premier trou de bride (14) et un second trou de bride (15), et une seconde rondelle à brides (16), qui présente un premier trou de bride (19) et un second trou de bride (20), le premier trou de bride (15) de la première rondelle à brides (11) étant aligné avec le premier trou de bride (19) de la seconde rondelle à brides (16), et le second trou de bride (15) de la première rondelle à brides (11) étant aligné avec le second trou de bride (20) de la seconde rondelle à brides (16),
- enfoncement d'un boulon (1) selon l'une quelconque des revendications 1 à 6 dans le premier trou de bride (19) de la seconde rondelle à brides (16) et dans le premier trou de bride (14) de la première rondelle à brides (11) ainsi que dans le second trou de bride (20) de la seconde rondelle à brides (16) et dans le second trou de bride (15) de la première rondelle à brides (11),
- appui du boulon (1), au moyen de son dispositif d'appui (21, 22), sur la première rondelle à brides (11),
- allongement élastique du boulon (1),
- appui sur la seconde rondelle à brides (16) et verrouillage du boulon (1) au moyen du dispositif de verrouillage (23).

18. Procédé selon la revendication 17,
les deux trous de fixation (7, 8) du boulon (1) devant être disposés sur la première rondelle à brides (11) et le dispositif d'appui étant un boulon transversal (21) qui est enfoncé dans les trous de fixation (7, 8), de sorte que le boulon transversal (21) s'appuie sur la première rondelle à brides (11).

19. Procédé selon la revendication 18 comprenant l'étape : disposition d'une plaque de support (22) entre le boulon transversal (21) et la première rondelle à brides (11), de sorte que le boulon transversal (21) s'appuie sur la plaque d'appui (22).

20. Procédé selon l'une quelconque des revendications 17 à 19, une clavette de contre-maintien (23) étant insérée entre la section coudée (2) et la seconde rondelle à brides (16) lors de l'appui de la section coudée (2), de sorte que le boulon (1) est verrouillé sur la seconde rondelle à brides (16).

21. Procédé selon l'une quelconque des revendications 17 à 20, l'allongement élastique du boulon (1) étant réalisé de manière hydraulique.

22. Procédé selon l'une quelconque des revendications 17 à 21, le raccord à brides étant un raccord à brides de turbine à vapeur.
